# EUROPEAN PATENT SPECIFICATION

(11) **EP 1 236 493 B1**
(45) Date of publication and mention of the grant of the patent: **18.04.2007**
(21) Application number: 02075663.1
(22) Date of filing: 18.02.2002
(51) Int. Cl.: B01D 33/11, B01D 33/72, B01D 33/46

(54) **Separating filter**
Trennfilter
Filtre separateur

(30) Priority: 26.02.2001 NL 1017450
(43) Date of publication of application: 04.09.2002
(73) Proprietor: Ton van Remmen Beheer B.V., 8131 SV Wijhe (NL)
(72) Inventor: Van Remmen, Antonius Maria, 7400 AL Deventer (NL)
(74) Representative: de Vries, Johannes Hendrik Fokke

(56) References cited:
- EP-A- 0 723 798
- WO-A-93/13846
- WO-A-98/05404
- DE-A- 2 213 910
- DE-A- 19 626 741
- DE-B- 1 611 122
- DE-U- 9 200 060
- FR-A- 2 287 936
- GB-A- 2 216 031
- US-A- 4 634 537

## Description

The invention relates to a separating filter according to the preamble of claim 1.

A separating filter of this type is known from DE 92 00 060 U. In this know separating filter the liquid inlet is positioned on the longitudinal axis of the filter drum and is provided with a discharge opening directed to the centre of the closed end of the filter drum.

EP-A-0956133 discloses a separating filter with two open ends, a first end via which the liquid enters the separating filter and a second end via which the material that has been filtered out of the liquid leaves the separating filter. The disadvantage of this known separating filter is that the liquid will contact the filter cloth only at some distance from the first end, which means that part of the filter cloth will remain unused. Moreover, the flow inside the filter drum is to a large extent laminar, or, said differently, little turbulent which increases the chance that material will attach to the filter cloth and clog up the filter cloth.

The present solution substantially obviates these disadvantages and is characterized by the characterizing features of claim 1. In this way, a relatively thick, turbulent layer of liquid is created near the first end, which prevents material from sticking to the filter cloth, in such a manner that the filter cloth remains completely open and that a very significant part of the liquid can pass the filter cloth already near the first end.

An embodiment of the inventive separating filter which is very simple from a constructional point of view is characterized in that the tube-shaped object projects through a central opening in the first end of the filter drum into the filter drum.

A favourable alternative embodiment of the inventive separating filter is characterized in that the tube-shaped object passes at least substantially along the longitudinal axis of the filter drum from the second end towards the first end of the filter drum.

Another favourable embodiment which makes it possible to build separating filters according to the invention with a substantially unlimited length, is characterized in that near the first end support means are installed, for supporting the tube-shaped object. These support means can be mounted onto the substantially closed first end of the filter drum and may be provided with bearing means, but they may also comprise a support mounted outside the filter drum, in which case the first end must be provided with a hole for allowing the tube-shaped object to pass through.

A favourable embodiment according to another aspect of the invention, in which the presence of the tube-shaped object is used advantageously, is characterized in that the tube-shaped object is provided with means for cleaning an inside of at least part of the filter cloth. This is especially important near the central part of the separating filter, where the nature of the liquid flow becomes more laminar, due to which the deposition of particles cannot be ruled out.

A favourable embodiment is characterized in that the means comprise brushing means or scraping means or irradiation means. The brushing means or scraping means touch the filter cloth preferably at the top of the filter drum, such that wiped-off material will drop to the bottom and will be transported to the second end of the filter drum by the rotating movement of the filter drum and the remaining liquid flow. Irradiation means may for example take the shape of an ultraviolet TL lamp, preventing the filter from becoming clogged due to bacteriological activity.

A very favourable embodiment according to still another aspect of the invention is characterized in that the means comprise a receiving through, mounted onto the tube-shaped object, and that spraying means are mounted above the filter drum, for operationally spraying part of the filter drum with a liquid. In this way, particles that are stuck to the filter cloth will be washed off and fall into the receiving through. This implies that the filter cloth will permanently be reconditioned and optimised. The liquid leaves the receiving through near the first end, which means that the spraying liquid is treated in the same manner by the separating filter as the liquid to be filtered.

The invention will now be further explained with a reference to the following figures, in which:
- Fig. 1: represents a possible embodiment of the inventive separating filter;
- Fig. 2: represents an alternative embodiment of the inventive separating filter;
- Fig. 3: represents an embodiment provided with a brush or a scraper;
- Fig. 4: represents an embodiment provided with spraying means and a receiving through.

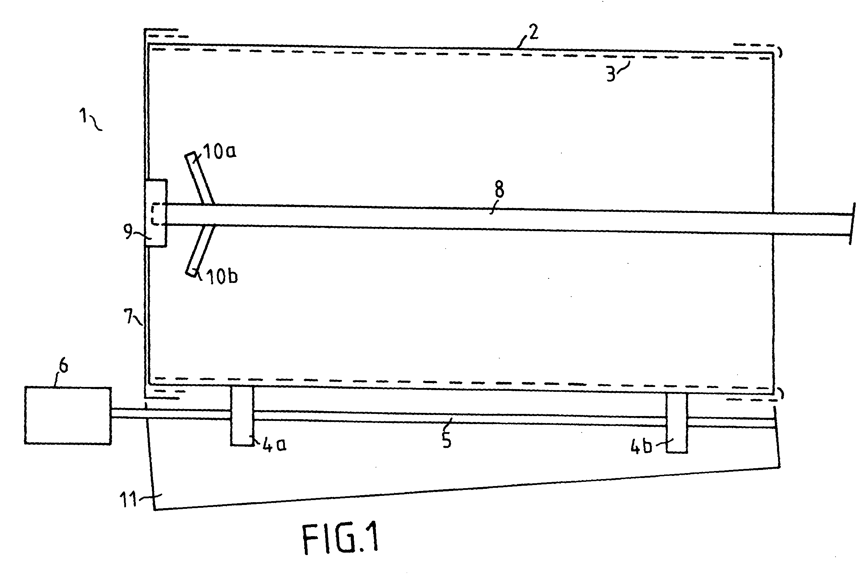

Fig. 1 represents a possible embodiment of the inventive separating filter 1, comprising a filter drum 2 made of for example stainless steel, here shown in a cut-away view, in which a large number of perforations has been made shaped as holes or slots and an inside of which is covered with a filter cloth 3, which is turned back at the ends of filter drum 2 and fixed with for example clip bindings, not shown here. In the embodiment shown here, filter drum 2 rests on a system of wheels, of which the driven wheels 4a,4b are shown here, which are coupled via a shaft 5 to an electric motor 6. The first end of filter drum 2 is closed with a cover 7, which slides over filter drum 2 and filter cloth 3 and can be fixed onto filter drum 2 with the aid of a number of screws, not shown here. The second end of filter drum 2 is open and via this second end a tube 8 is inserted into filter drum 2, the end of which is closed and can rotate freely inside a plastic disk 9 which is mounted onto cover 7. Via tube 8, a liquid, for example polluted water, is supplied which spouts against cover 7, for example via two discharge openings 10a, 10b, at the position where cover 7 and filter drum 2 meet. Then the water passes filter cloth 3 and filter drum 2 and ends up in a receptacle 11, from which it is drained off via an outlet pipe, not shown, for further processing or for reuse. Filtered out pollution remains on the filter cloth and moves slowly towards to the second end, where it drops out of filter drum 2. In order to stimulate this process, filter drum 2 is mounted slightly tilted. Tube 8 is for example mounted to receptacle 11 with a bracket, not shown here.

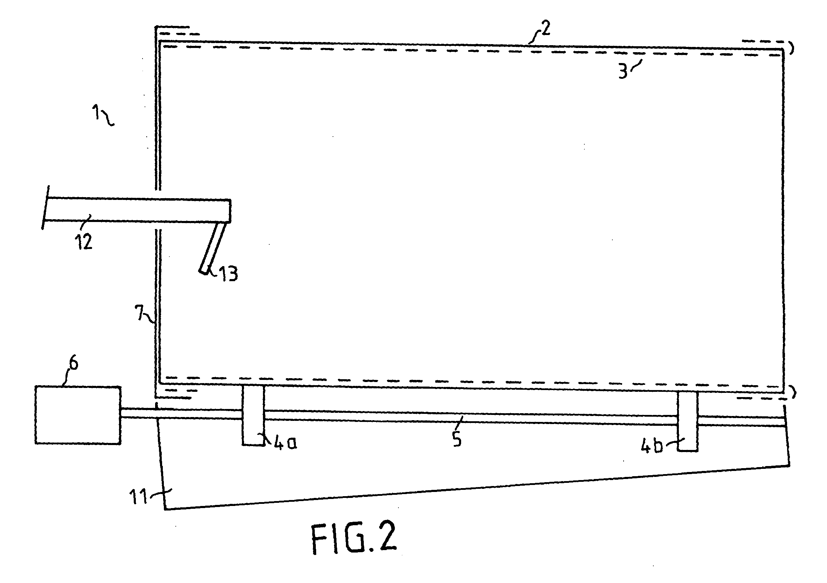

Fig. 2 represents an alternative embodiment of the inventive separating filter 1, provided with a filter drum 2, a filter cloth 3 and a cover 7. In this embodiment the water is supplied to separating filter 1 from the first end, via a tube 12, of which the end is closed and which is provided with discharge opening 13, via which water spouts into the direction of cover 7, into the direction where cover 7 and filter drum 2 meet. Tube 12 is for example mounted to receptacle 11 with a bracket, not shown here.

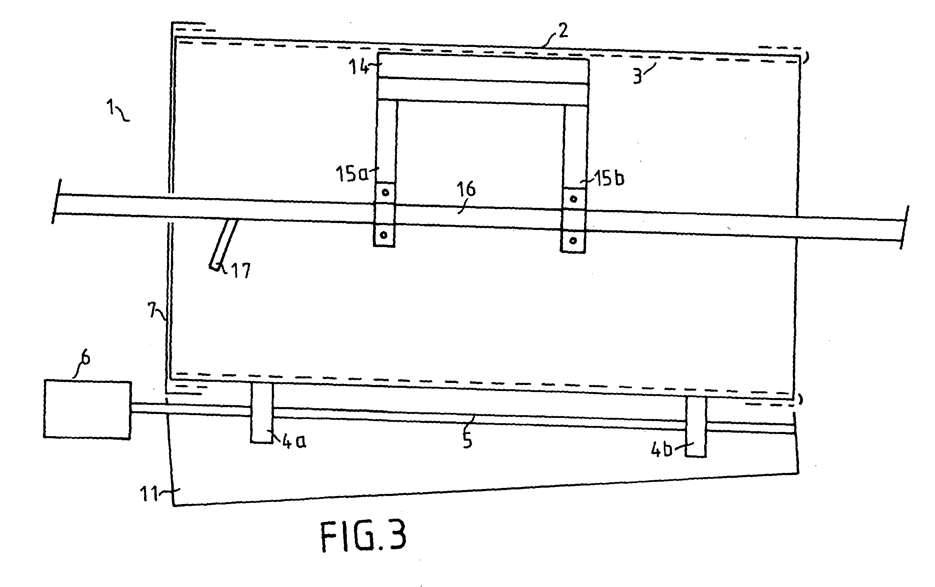

Fig. 3 represents an embodiment of the inventive separating filter 1, provided with a brush or a scraper 14, which is mounted to tube 16 with two brackets 15a,15b. Via tube 16, a liquid to be filtered is supplied from the first or the second end of filter drum 2. The liquid leaves a discharge opening 17 and is directed to the position where cover 7 and filter drum 2 meet and produces a relatively thick layer of liquid and so much turbulence that polluting components cannot settle to filter cloth 3. For some filtering processes, halfway filter drum 2, nevertheless a deposit may be formed onto filter cloth 3, because the flow of the remaining liquid towards the second end of filter drum 2 is of a substantially laminar nature. In that situation, one may advantageously use a brush or scraper 14, which can wipe off the deposit from filter cloth 3. Another type of deposit, which can occur in some filtering processes, is caused by bacterial activity. This may lead to a gradual reduction of the permeability of the filter cloth. The formation of this type of deposit may be suppressed by irradiating filter cloth 3 with UV light. For that purpose, a UV lamp, for example of the TL type, preferably housed in a drip-proof housing, can be mounted in a corresponding manner with brackets to tube 16. Tube 16 itself is for example mounted to receptacle 11 with two brackets, not shown here.

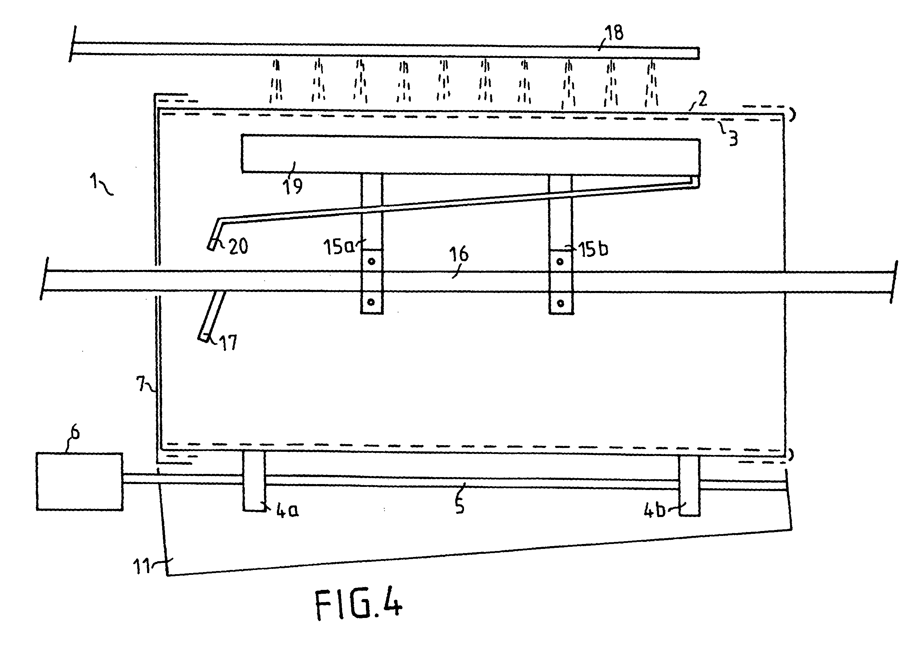

Fig. 4 represents an embodiment of the inventive separating filter 1, provided with spraying means 18 and a receiving through 19, with which a deposit on the inside of filter cloth 3 can be removed in an extraordinary efficient manner. For that purpose, water for example originating from receptacle 11 is supplied by a pump, not shown here, to a spray nozzle arrangement 18, for example consisting of a tube in which a number of holes have been drilled, which sprays the water on the top side of drum 2. The water then permeates the filter cloth 3 and sets free any deposit that might be present. This deposit falls, together with the water, in a receiving through 19 and lands, via a discharge pipe 20, near the first end in filter drum 2. Receiving through 19 has for example a semicircular cross section and is provided with a partition near receiving through 19. Receiving through 19 is mounted to tube 16 with two brackets 15a,15b, while tube 16 itself is for example mounted to receptacle 11 with two brackets, not shown here.

## Claims

1. Separating filter, comprising a filter drum (2) having a first end substantially closed by a cover (7) and an open second end, the filter drum being mounted for rotation around a longitudinal axis and being provided with a liquid inlet (10a, 10b, 13, 17) at the first end for feeding a liquid to be filtered into the filter drum (2) into the direction of the cover (7), collecting means (11) for collecting liquid that has been filtered by the separating filter, and an outlet positioned at the second end of the filter drum for removing material that has been filtered out of the liquid, **characterized in that** an inside of the filter drum (2) is provided with a filter cloth (3) and **in that** the liquid inlet (10a, 10b, 13, 17) comprises a tube-shaped object (8, 12, 16) and is provided with a discharge opening directed to the position where the cover (7) and the filter drum (2) meet.

2. Separating filter according to claim 1, **characterized in that** the tube-shaped object (12) projects through a central opening in the first end (7) of the filter drum into the filter drum (2).

3. Separating filter according to claim 1, **characterized in that** the tube-shaped object (8, 16) passes at least substantially along the longitudinal axis of the filter drum from the second end towards the first end (7) of the filter drum (2).

4. Separating filter according to claim 3, **characterized in that** near the first end support means are installed, for supporting the tube-shaped object.

5. Separating filter according to claim 3, **characterized in that** the tube-shaped object (16) is provided with means (14) for in that the tube-shaped object is provided with means for cleaning an inside of at least part of the filter cloth (3).

6. Separating filter according to claim 5, **characterized in that** the means (14) comprise brushing means or scraping means or irradiation means.

7. Separating filter according to claim 5, **characterized in that** the means comprise a receiving through (19) mounted onto the tube-shaped object (16), and that spraying means (18) are mounted above the filter drum (2), for operationally spraying part of the filter drum with a liquid.

## Patentansprüche

1. Trennfilter, aufweisend: eine Filtertrommel (2) mit einem ersten Ende, das von einer Abdeckung (7) im Wesentlichen verschlossen ist, und einem offenen, zweiten Ende, wobei die Filtertrommel montiert ist zum Drehen um eine Längsachse herum und an dem ersten Ende mit einem Flüssigkeitseinlass (10a, 10b, 13, 17) versehen ist zum Zuführen einer zu filternden Flüssigkeit in die Filtertrommel (2) hinein und in Richtung zu der Abdeckung (7) hin, Sammelmittel (11) zum Sammeln von Flüssigkeit, die von dem Trennfilter gefiltert wurde, und einen Auslass, der an dem zweiten Ende der Filtertrommel angeordnet ist, zum Entfernen von Material, das aus der Flüssigkeit herausgefiltert wurde,
**dadurch gekennzeichnet, dass** eine Innenseite der Filtertrommel (2) mit einem Filtergewebe (3) versehen ist und dass der Flüssigkeitseinlass (10a, 10b, 13, 17) ein rohrförmiges Objekt (8, 12, 16) aufweist und mit einer Auslassöffnung versehen ist, die zu der Position hin gerichtet ist, an der die Abdeckung (7) und die Filtertrommel (2) zusammentreffen.

2. Trennfilter gemäß Anspruch 1, **dadurch gekennzeichnet, dass** das rohrförmige Objekt (12) durch eine mittige Öffnung in dem ersten Ende (7) der Filtertrommel hindurch in die Filtertrommel (2) hinein vorsteht.

3. Trennfilter gemäß Anspruch 1, **dadurch gekennzeichnet, dass** das rohrförmige Objekt (8, 16) sich zumindest im Wesentlichen entlang der Längsachse der Filtertrommel von dem zweiten Ende aus in Richtung zu dem ersten Ende (7) der Filtertrommel (2) hin erstreckt.

4. Trennfilter gemäß Anspruch 3, **dadurch gekennzeichnet, dass** in der Nähe des ersten Endes Stützmittel installiert sind zum Abstützen des rohrförmigen Objektes.

5. Trennfilter gemäß Anspruch 3, **dadurch gekennzeichnet, dass** das rohrförmige Objekt (16) mit Mitteln (14) versehen ist zum Reinigen einer Innenseite von wenigstens einem Teil des Filtergewebes (3).

6. Trennfilter gemäß Anspruch 5, **dadurch gekennzeichnet, dass** die Mittel (14) Bürstmittel oder Kratzmittel oder Bestrahlungsmittel aufweisen.

7. Trennfilter gemäß Anspruch 5, **dadurch gekennzeichnet, dass** die Mittel einen Aufnahmedurchgang (19) aufweisen, der auf das rohrförmige Objekt (16) montiert ist, und dass Sprühmittel (18) über der Filtertrommel (2) montiert sind zum operativen Besprühen eines Teils der Filtertrommel mit einer Flüssigkeit.

## Revendications

1. Filtre séparateur, comprenant un tambour de filtre (2) avec une première extrémité sensiblement fermée par un couvercle (7) et une seconde extrémité ouverte, le tambour de filtre étant monté pour la rotation autour d'un axe longitudinal et étant muni d'une entrée liquide (10a, 10b, 13, 17) sur la première extrémité pour alimenter un liquide à filtrer dans le tambour de filtre (2) en direction du couvercle (7) et des moyens de recueil (11) pour recueillir le liquide qui a été filtré par le filtre séparateur, et une sortie positionnée sur la seconde extrémité du tambour de filtre pour l'évacuation de la matière qui a été filtrée du liquide,
**caractérisé en ce qu'**une partie intérieure du tambour de filtre (2) est munie d'un tissu de filtre (3), et **en ce que** l'entrée liquide (10a, 10b, 13, 17) comprend un objet tubulaire (8, 12, 16) et est munie d'une ouverture de décharge dirigée vers la position où se rencontrent le couvercle (7) et le tambour de filtre (2).

2. Filtre séparateur selon la revendication 1, **caractérisé en ce que** l'objet tubulaire (12) fait saillie à travers une ouverture centrale dans la première extrémité (7) du tambour de filtre jusque dans le tambour de filtre (2).

3. Filtre séparateur selon la revendication 1, **caractérisé en ce que** l'objet tubulaire (8, 16) passe au moins sensiblement le long de l'axe longitudinal du tambour de filtre à partir de la seconde extrémité, en direction de la première extrémité (7) du tambour de filtre (2).

4. Filtre séparateur selon la revendication 3, **caractérisé en ce qu'**à proximité de la première extrémité, sont installés des moyens de support destinés à supporter l'objet tubulaire.

5. Filtre séparateur selon la revendication 3, **caractérisé en ce que** l'objet tubulaire (16) est muni de moyens (14) pour nettoyer une partie intérieure d'au moins une partie du tissu de filtre (3).

6. Filtre séparateur selon la revendication 5, **caractérisé en ce que** les moyens (14) comprennent des moyens de brossage ou des moyens de grattage ou des moyens d'irradiation.

7. Filtre séparateur selon la revendication 5, **caractérisé en ce que** les moyens comprennent une cuvette (19), montée sur l'objet tubulaire (16), et **en ce que** des moyens de pulvérisation (18) sont montés au-dessus du tambour de filtre (2) pour pulvériser, lors du fonctionnement, une partie du tambour de filtre avec un liquide.
